# EUROPEAN PATENT APPLICATION

(11) **EP 4 376 275 A1**
(43) Date of publication of application: **29.05.2024**
(21) Application number: 22846054.9
(22) Date of filing: 16.06.2022
(51) Int. Cl.: H02K 15/03, H02K 1/276, H02K 1/28, C09J 163/00

(54) **METHOD FOR MANUFACTURING LAMINATED CORE**

(30) Priority: 21.07.2021 KR 20210095993
(71) Applicant: Daewon Kang Up Co., Ltd., Cheonan-si, Chungcheongnam-do 31042 (KR)
(72) Inventor: KIM, Jae Seok, Seoul 05834 (KR); KIM, Jin Young, Yongin-si, Gyeonggi-do 16847 (KR); LEE, Jae Shik, Seoul 07279 (KR)
(74) Representative: Stöckeler, Ferdinand
(86) International application number: PCT/KR2022/008574
(87) International publication number: WO 2023/003182

(57) **Abstract**

The present disclosure relates to a manufacturing method for a laminated core, which manufactures the laminated core by bonding lamina members. The manufacturing method includes: a laminated core forming step of forming a laminated core by sequentially forming and laminating lamina members having a predetermined shape while passing a thin sheet having an adhesive layer formed on a surface thereof; a magnet insertion step of inserting a magnet into a magnet insertion hole of the laminated core; a resin filling step of filling resin in the magnet insertion hole of the laminated core into which the magnet is inserted; and a curing step of heating the resin-filled laminated core to cure the adhesive layer of the lamina member, so that the laminated core is integrated and the filled resin is simultaneously cured. In this way, the laminated core in which resin is filled is heated, and the adhesive layer of the lamina member is cured, so that the laminated core can be integrated and the filled resin can be simultaneously cured. Accordingly, the manufacturing process can be simplified and the time and cost required for manufacturing can be reduced.

## Description

### [Technical Field]

The present disclosure relates to a manufacturing method for a laminated core and more particularly to a manufacturing method for a laminated core, which manufactures the laminated core by bonding lamina members.

### [Background Art]

A motor is a mechanic device which obtains a rotational force from electric energy and includes a stator and a rotor. The rotor electromagnetically interworks with the stator and rotates by a force acting by a magnetic field and a current flowing through a coil.

The stator refers to a stationary part in a rotating machine such as a motor, etc., that is, a part that is fixed without rotating. For example, in the case of an inductor, the stator includes a stator core, a stator coil, etc.

Such rotor and stator may be formed with laminated cores which are manufactured by laminating lamina members, which are metal thin sheets, in the form of a plurality of layers and by integrating them.

A manufacturing method for the laminated core is known as including a method of integrally fixing the lamina member in the form of a plurality of laminated layers by using a welding fixing method using a laser welding or a rivet fixing method, etc.

However, when the laminated lamina members are integrated by the welding fixing member, the lamina member is thermally deformed by welding heat and the property of the lamina member is changed.

Here, recently, a bonding fixing method is proposed, which bonds the lamina members, that is, unit thin layers of the laminated core, to each other by means of an adhesive and integrates them. Korean Patent Application Laid-Open No. 10-1996-003021 and Japanese Patent Application Laid-open No. H05-304037 disclose the bonding fixing method.

Referring to Japanese Patent Application Laid-open No. H05-304037 among the patent documents mentioned above, a steel sheet that is a material for manufacturing a motor core is supplied to a first press molding machine and a second press molding machine through a transfer roller. An adhesive is applied to the steel sheet by an application roller and nozzles before passing through the first press molding machine.

Also, the lamina member which is sequentially accumulated in the internal space of the first press molding machine and the second press molding machine due to blanking of the material is integrated by the adhesive, and an adhesive laminated core is hereby manufactured. According to such a conventional manufacturing method of the adhesive laminated core, a cost can be reduced compared to the laser welding, and the steel sheet is enabled to cope with a tendency to be thinner.

However, in the application of the manufacturing method for the adhesive laminated core, the lamina members are laminated and heated, and an adhesive must be primarily cured. Then, resin is injected and then must be secondarily cured in order to fix a magnet to the laminated core. Therefore, there is a problem that the process becomes complicated and the laminated core is thermally deformed by a plurality of heat treatment processes.

### [DISCLOSURE]

### [Technical Problem]

The embodiment of the present disclosure is designed to solve the above problems and has a purpose of providing a manufacturing method for a laminated core, which is capable of heating the laminated core and of curing simultaneously an adhesive layer of the lamina member and a filled resin.

### [Technical Solution]

One embodiment is a manufacturing method for a laminated core. The manufacturing method includes: a laminated core forming step of forming a laminated core by sequentially forming and laminating lamina members having a predetermined shape while passing a thin sheet having an adhesive layer formed on a surface thereof; a magnet insertion step of inserting a magnet into a magnet insertion hole of the laminated core; a resin filling step of filling resin in the magnet insertion hole of the laminated core into which the magnet is inserted; and a curing step of heating the resin-filled laminated core to cure the adhesive layer of the lamina member, so that the laminated core is integrated and the filled resin is simultaneously cured.

The laminated core forming step may include: a lamina member manufacturing step of sequentially forming the lamina members in which common punching and embossing are formed by blanking the thin sheet; and a lamina member integration step of laminating and pressing the lamina members and fastening a plurality of the lamina members in such a way as to form the laminated core.

In the lamina member manufacturing step, an embossing through hole into which the embossing is inserted may be formed at a position where the embossing is formed in a first lamina member forming the laminated core.

The laminated core forming step may include: a lamina member manufacturing step of sequentially forming the lamina members in which common punching is formed by blanking the thin sheet; and a lamina member lamination step of laminating the lamina member on a carrier tray so as to form the laminated core.

The curing step may include: a pressing step of pressing the resin-filled laminated core; a heating step of heating the pressed laminated core; and a cooling step of cooling the heated laminated core.

In the pressing step, the laminated core may be pressed with a pressure of 1 to 15 MPa.

In the heating step, the heating may be performed for 120 to 230 seconds at a temperature range of 110 to 210 °C.

The resin filling step may include: a carrier tray seating step in which a carrier tray on which the laminated core is seated and which has a communication hole communicating with the magnet insertion hole is formed is disposed between an upper mold and a lower mold; a core pressing step in which the laminated core is pressed with the upper mold and the lower mold; and a resin injection step in which resin is injected into the magnet insertion hole through the communication hole by a resin supply unit provided in the lower mold.

The core pressing step may be performed to press an entire upper surface of the laminated core with the same pressure.

### [Advantageous Effect]

According to the manufacturing method for a laminated core according to the embodiment of the present disclosure, the laminated core in which resin is filled is heated, and the adhesive layer of the lamina member is cured, so that the laminated core can be integrated and the filled resin can be simultaneously cured. Accordingly, the manufacturing process can be simplified and the time and cost required for manufacturing can be reduced.

### [Description of Drawings]

FIG. 1 is a flowchart showing schematically a manufacturing method for a laminated core according to an embodiment of the present disclosure;
FIG. 2 is a flowchart showing schematically a resin filling step in the manufacturing method for a laminated core according to the embodiment of the present disclosure;
FIG. 3 is a flowchart showing schematically a curing step in the manufacturing method for a laminated core according to the embodiment of the present disclosure;
FIG. 4 is a flowchart showing schematically a laminated core forming step in the manufacturing method for a laminated core according to the embodiment of the present disclosure;
FIG. 5 is a flowchart showing schematically a laminated core forming step according to another embodiment of the present disclosure in the manufacturing method for a laminated core according to the embodiment of the present disclosure;
FIG. 6 is a view showing schematically a core mold used in the manufacturing method for a laminated core according to the embodiment of the present disclosure;
FIG. 7 is a view showing schematically a laminated core manufactured in the core mold used in the manufacturing method for a laminated core according to the embodiment of the present disclosure;
FIG. 8 is a view showing schematically a core mold according to another embodiment of the present disclosure used in the manufacturing method for a laminated core according to the embodiment of the present disclosure;
FIG. 9 is a view showing schematically a laminated core and a carrier tray according to another embodiment of the present disclosure manufactured in the core mold used in the manufacturing method for a laminated core according to the embodiment of the present disclosure;
FIG. 10 is a view showing schematically a resin filling device used in the manufacturing method for a laminated core according to the embodiment of the present disclosure;
FIG. 11 is a view showing schematically a main part of the resin filling device used in the manufacturing method for a laminated core according to the embodiment of the present disclosure;
FIG. 12 is a view showing schematically a state where a central base is pressed by an upper mold and a lower mold in the resin filling device used in the manufacturing method for a laminated core according to the embodiment of the present disclosure;
FIG. 13 is a view showing schematically a state where a resin supply unit operates to inject resin into a magnet insertion hole in the resin filling device used in the manufacturing method for a laminated core according to the embodiment of the present disclosure.

### [Mode for Invention]

Hereinafter, preferred embodiments of the present invention will be described in detail with reference to the accompanying drawings.

As the present invention can have various embodiments as well as can be diversely changed, specific embodiments will be illustrated in the drawings and described in detail. While the present invention is not limited to particular embodiments, all modification, equivalents and substitutes included in the spirit and scope of the present invention are understood to be included therein.

Terms used in the present specification are provided for description of only specific embodiments of the present invention, and not intended to be limiting. An expression of a singular form includes the expression of plural form thereof unless otherwise explicitly mentioned in the context.

Unless differently defined, all terms used herein including technical and scientific terms have the same meaning as commonly understood by one of ordinary skill in the art to which the present invention belongs. Terms, for example, commonly used terms defined in the dictionary, are to be construed to have exactly the same meaning as that of related technology in the context. As long as terms are not clearly defined in the present application, the terms should not be ideally or excessively construed as formal meaning.

Hereinafter, specific embodiments of the present invention will be described with reference to the accompanying drawings.

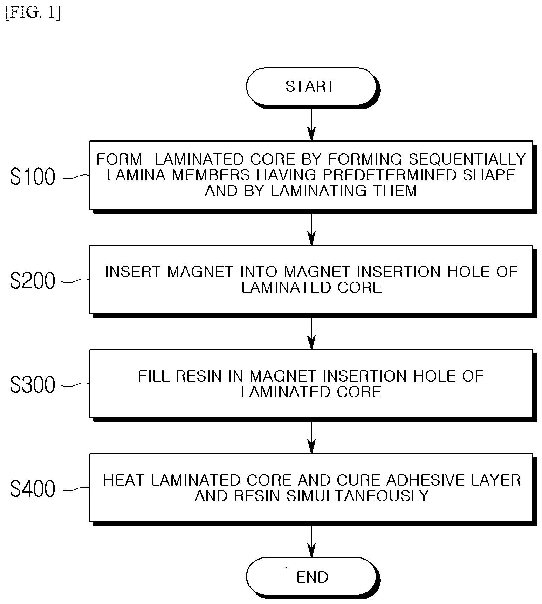

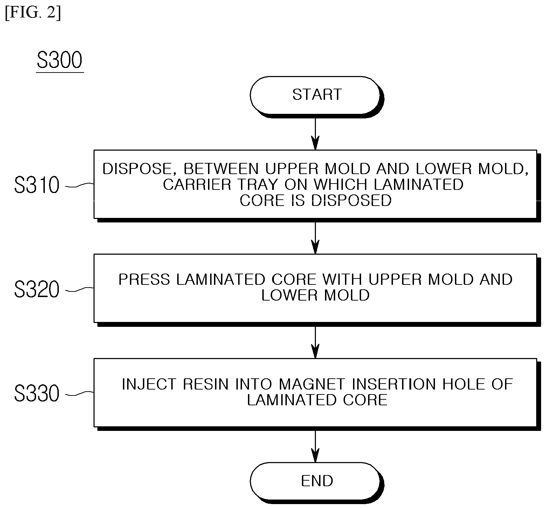

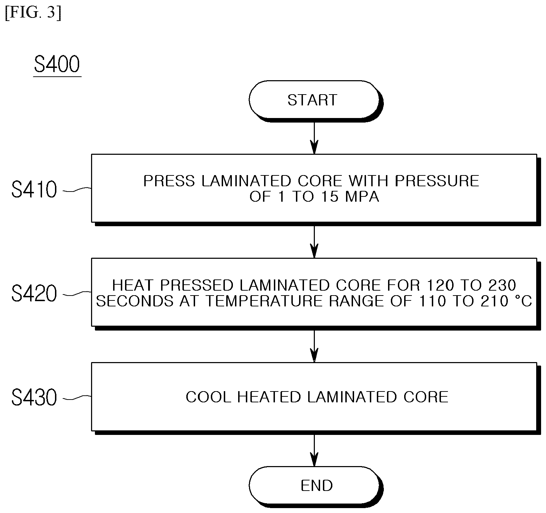

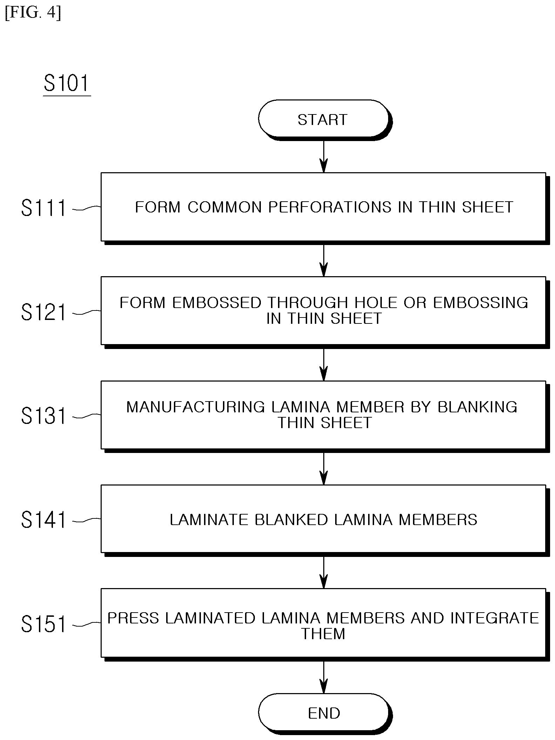

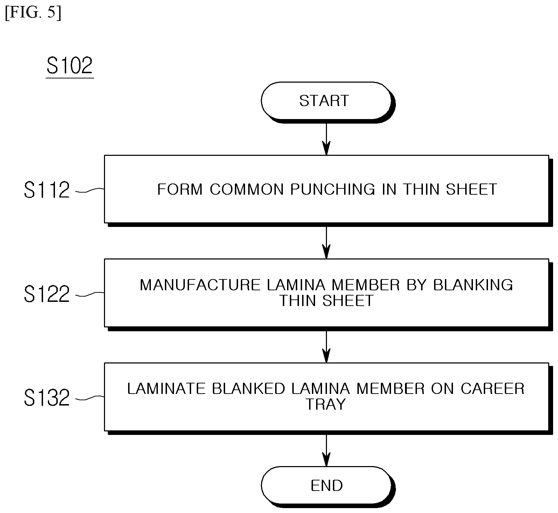

FIG. 1 is a flowchart showing schematically a manufacturing method for a laminated core according to an embodiment of the present disclosure. FIG. 2 is a flowchart showing schematically a resin filling step in the manufacturing method for a laminated core according to the embodiment of the present disclosure. FIG. 3 is a flowchart showing schematically a curing step in the manufacturing method for a laminated core according to the embodiment of the present disclosure. FIG. 4 is a flowchart showing schematically a laminated core forming step in the manufacturing method for a laminated core according to the embodiment of the present disclosure. FIG. 5 is a flowchart showing schematically a laminated core forming step according to another embodiment of the present disclosure.

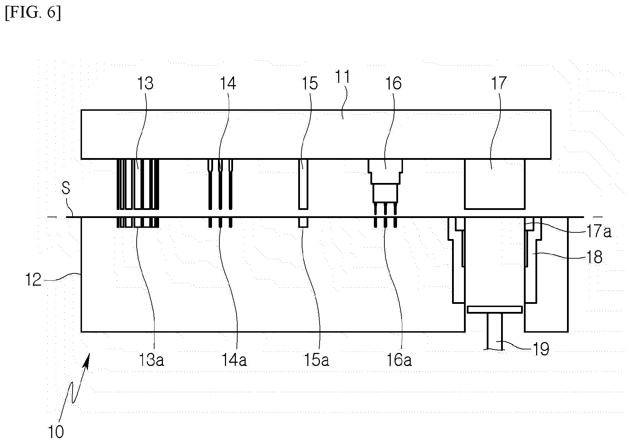

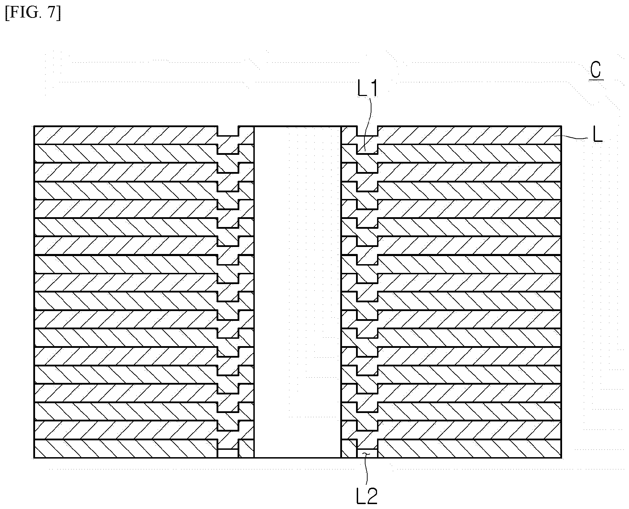

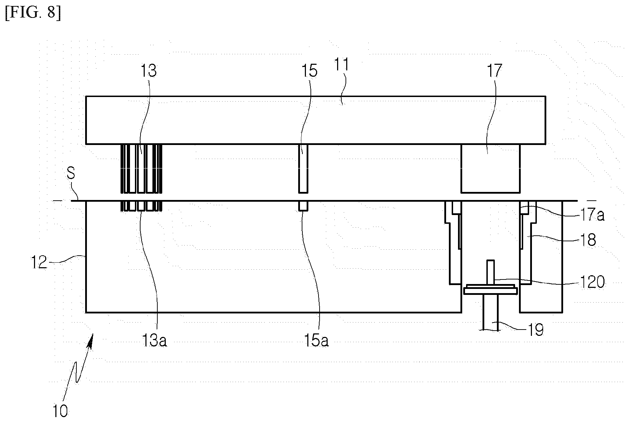

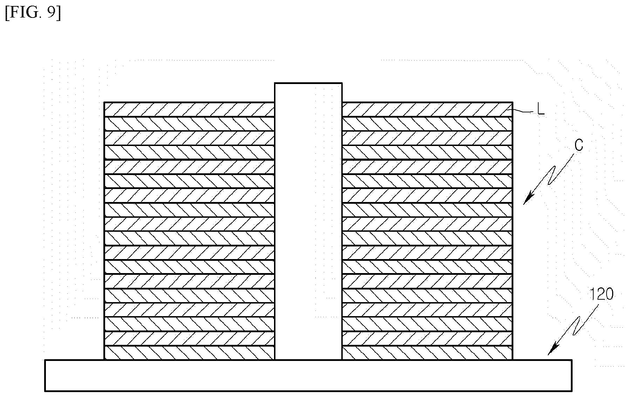

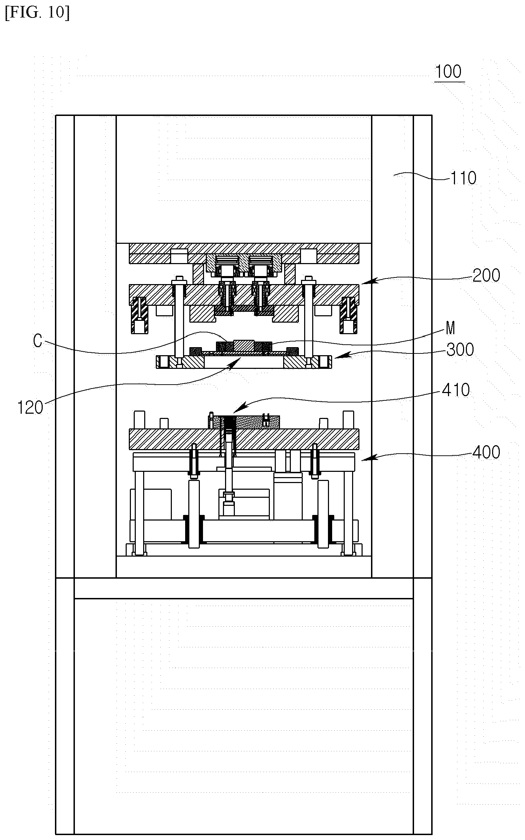

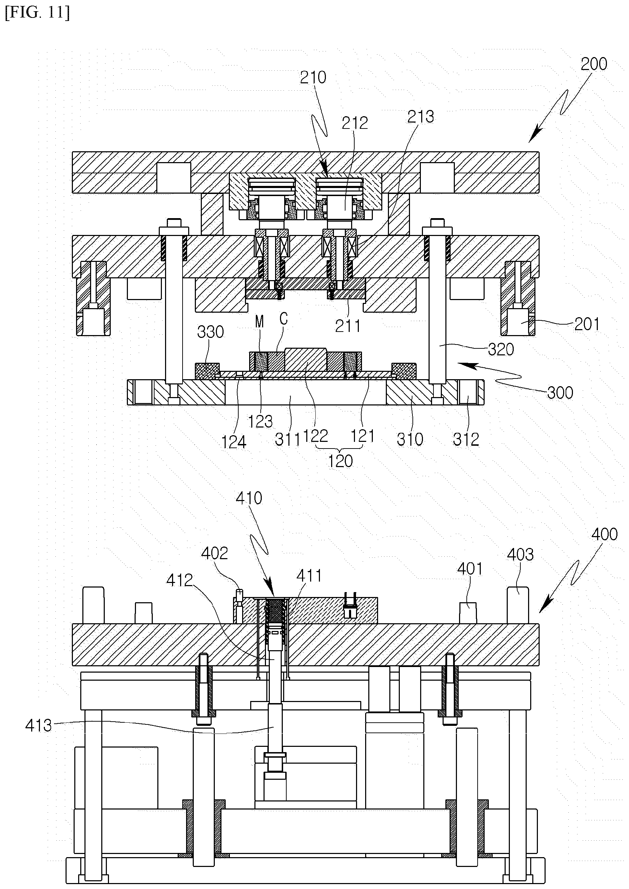

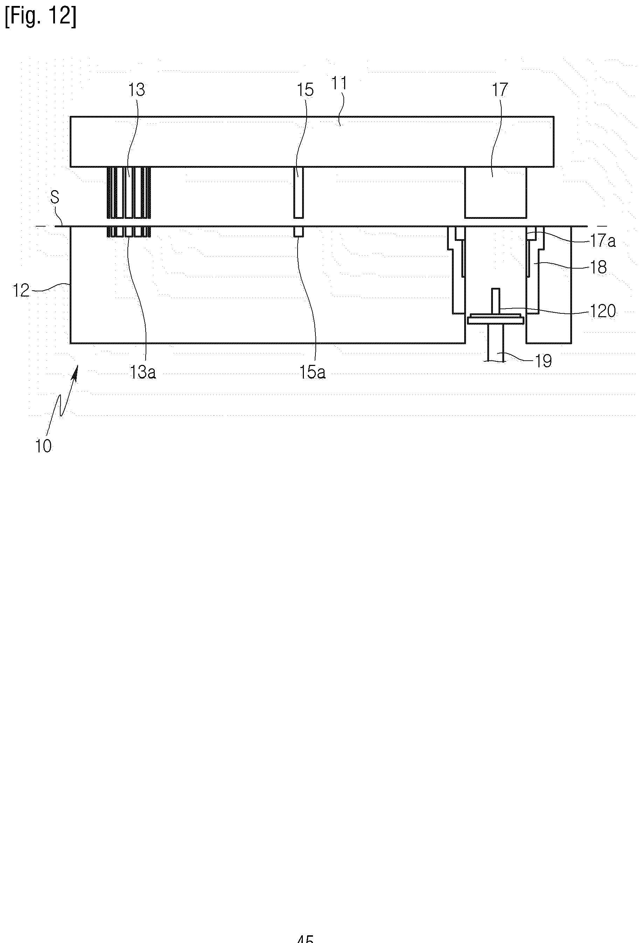

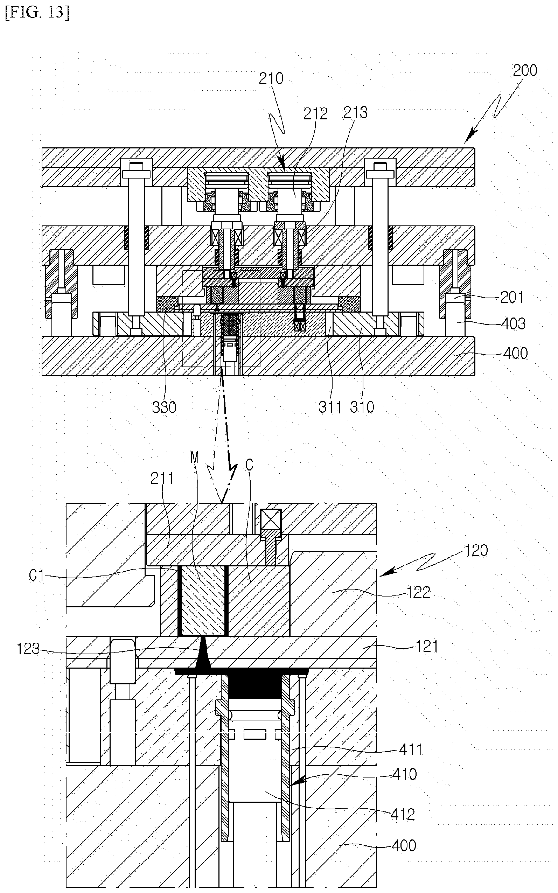

FIGS. 6 and 7 are views showing schematically a core mold used in the manufacturing method for a laminated core according to the embodiment of the present disclosure and a laminated core manufactured in the core mold. FIGS. 8 and 9 are views showing schematically a core mold according to another embodiment and a laminated core and a carrier tray manufactured in the core mold. FIGS. 10 to 13 are views showing schematically a resin filling device used in the manufacturing method for a laminated core.

Referring to FIGS. 1 to 13, the manufacturing method for a laminated core according to the embodiment of the present disclosure may include a laminated core forming step S 100 of forming a laminated core by forming a thin sheet having an adhesive layer formed on the surface thereof as lamina members and by laminating them, a magnet insertion step S200 of inserting a magnet M into a magnet insertion hole C1 of the laminated core, a resin filling step S300 of filling resin in the magnet insertion hole C1, and a curing step S400 of simultaneously curing the adhesive layer and the resin.

According to a conventional laminated core manufacturing method forming a laminated core by forming a thin sheet having an adhesive layer formed on the surface thereof as lamina members and by laminating them, the laminated core is formed by manufacturing lamina members in a core mold and then by laminating. The laminated core is heated in the core mold, and then the adhesive layer is cured. Then, the lamina members are integrated to form the laminated core.

Then, after a magnet is inserted into a magnet insertion hole of the laminated core, resin is filled in order to fix the magnet, and the laminated core is heated again to cure the resin.

As such, according to the conventional laminated core manufacturing method, the curing is required twice, which makes the work process complicated, and the laminated core may be thermally deformed due to multiple heat treatment processes. In addition, since the core mold must be equipped with a heating device and a cooling device, the manufacturing cost and maintenance cost of the core mold are increased.

Accordingly, according to the manufacturing method for a laminated core according to the embodiment of the present disclosure, the curing in the core mold is omitted, and after the resin is filled in the laminated core, the laminated core is heated to cure the adhesive layer of the lamina member. Thus, the laminated core is integrated and the filled resin is simultaneously cured.

Hereinafter, each of the steps of the manufacturing method for a laminated core according to the embodiment of the present disclosure will be described in more detail.

The laminated core forming step S100 is to form the laminated core C by sequentially forming and laminating lamina members L having a predetermined shape while passing the thin sheet S having an adhesive layer formed on the surface thereof.

As an example, the laminated core forming step S101 may include lamina member manufacturing steps S111 to S131 and lamina member integration steps S141 to S151.

The lamina member manufacturing steps S111 to S 131 are to sequentially form the lamina members L in which common punching and embossing L1 are formed by blanking the thin sheet S.

The lamina member integration steps S141 to S151 are to laminate and press the lamina members L and fasten a plurality of lamina members L in such a way as to form the laminated core C.

More specifically, the laminated core forming step S101 according to the example includes: forming the common punching in the thin sheet S by using the core mold 10 (S111), forming an embossing through hole L2 or the embossing L1 in the thin sheet S (S 121), manufacturing the lamina member L by blanking the thin sheet S in which the embossed through hole L2 or the embossing L1 is formed (S131), laminating the blanked lamina members L (S141), integrating the lamina members L while fitting and fastening the plurality of lamina members L by means of the embossing L1 formed on the lamina member L by pressing the laminated lamina members L. Through the above steps, the laminated core C can be formed.

For this purpose, the core mold 10 used in the manufacturing method for a laminated core according to the embodiment of the present disclosure may include a slot punch 13, an embossing through-hole punch 14, a shaft hole punch 15, an embossing punch 16, and a blanking portion 17. Here, the embossing through hole punch 14 functions as a unit which divides the laminated cores C in the core mold 10.

The core mold 10 is a press-based device and is divided into an upper mold 11 and a lower mold 12. The upper mold 11 includes the punches 13, 14, 15, 16, and 17 that press the thin sheet S and perform stamping, embossing, or blanking.

Also, the lower mold 12 includes punch holes 13a, 14a, 15a, 16a, and 17a corresponding to the punches. Also, a lamination barrel 18 for laminating and adhering the lamina members L is provided to the lower mold 12.

More specifically, the slot punch 13 and the shaft hole punch 15 are provided to form a common punching in the thin sheet S. The embossing through hole punch 14 is provided to form the embossing through hole L2 in the thin sheet S. The embossing punch 16 is provided to form the embossing L1 on the thin sheet S.

Also, the blanking portion 17 is provided on the upper mold 11, and a blanking hole 171 facing the blanking portion 17 is formed in the lower mold 12, so that the lamina member L blanked in the thin sheet S by the blanking portion 17 is inserted into the lamination barrel 18 and laminated.

Also, in the lamina member manufacturing step 101 according to the example, the embossing L1 is not formed at the position where the embossing L1 is formed in the first lamina member L forming the laminated core C, and the embossing through hole L2 into which the embossing L1 is inserted is formed. This is a process for dividing the plurality of laminated cores C laminated in the lamination barrel 18 into each other.

More specifically, the embossing through hole L2 is not formed in all lamina members L. As shown in FIG. 7, in the first lamina member for forming one laminated core C, the embossing through hole L2 is formed at the same position where the embossing L1 is formed.

Also, in the lamina members which are subsequently laminated, the embossing through hole L2 is not formed, but the embossing L1 is formed at that position, and the embossing L1 is fitted and fastened to the embossing through hole L2 of the first lamina member. The lamina members which are subsequently laminated are fitted and fastened to the embossing L1 respectively and integrated.

Then, when one laminated core C is integrated, a new laminated core C may be integrated by forming the embossing through hole L2 in the lamina member again. Here, when the embossing through hole L2 is formed in the lamina member, it is not fitted and fastened to the lamina member disposed below, so any one integrated laminated core C and another laminated core C to be laminated later can be manufactured separately.

Of course, the method of integrating the plurality of lamina members is not limited to this, and any conventional method can be applied as long as it can integrate the lamina members in the lamination barrel 18 without heating the lamina members.

As another example, the laminated core forming step S 102 may include manufacturing the lamina member (S122) and laminating the lamina member (S132). In the manufacturing the lamina member (S 122), the common punching is formed in the thin sheet S (S 112), and then the lamina members L are sequentially formed by blanking the thin sheet S in which the common punching has been formed. In the laminating the lamina member (S 132), the lamina member L is laminated on a carrier tray 120 so as to form the laminated core C.

That is, in the laminated core forming step S 102 according to above-described another example, the carrier tray 120 is placed in advance on a laminated core transfer part 19 provided in the lamination barrel 18, and then the lamina member L blanked through the blanking portion 17 is directly laminated on the carrier tray 120.

Here, when the lamina members L are laminated on one carrier tray to form one laminated core, a new carrier tray may be placed to laminate one laminated core again.

In this case, the plurality of lamina members L laminated on the carrier tray 120 is disposed as it is in a resin filling device 100, and resin is filled. The resin-filled laminated core disposed on the carrier tray 120 is disposed as it is in a curing device (not shown), and a curing process may be performed.

Through this method, it is possible to omit a separate process of manufacturing the embossing and a process of pressing and integrating the lamina members L laminated in the lamination barrel 18.

The magnet insertion step S200 is to insert a magnet into the magnet insertion hole C1 of the laminated core C in a state where the laminated core C is disposed on the carrier tray 120.

Also, the resin filling step S300 is to fill resin in the magnet insertion hole C1 of the laminated core C into which the magnet M has been inserted.

More specifically, the resin filling step S300 may include a carrier tray seating step S310, a core pressing step S320, and a resin injection step S330. In the carrier tray seating step S310, the carrier tray 120 on which the laminated core C is seated and which has a communication hole 123 communicating with the magnet insertion hole C1 is formed is disposed between an upper mold 200 and a lower mold 400. In the core pressing step S320, the laminated core C is pressed with the upper mold 200 and the lower mold 400. In the resin injection step S330, resin is injected into the magnet insertion hole C1 through the communication hole 123 by a resin supply unit 410 provided in the lower mold 400.

The resin filling step S300 can be performed through the resin filling device 100 shown in FIGS. 10 to 13.

Hereinafter, the resin filling device 100 will be described in more detail with reference to FIGS. 10 to 13.

The resin filling device 100 may include a base frame 110, the upper mold 200 which is provided on the base frame 110, the lower mold 400 which is provided on the base frame 110 and faces the upper mold 200, a center base 300 which is disposed between the upper mold 200 and the lower mold 400, and the resin supply unit 410 which injects resin into the magnet insertion hole C1 of the laminated core C.

The base frame 110 forms the external appearance of the resin filling device 100. As an example, the base frame 110 may be equipped with press equipment to move at least one of the upper mold 200 and the lower mold 400 in an up and down direction.

The upper mold 200 is provided over the base frame 110. Also, the upper mold 200 presses the upper surface of the laminated core C while injecting resin into the magnet insertion hole C1 of the laminated core C.

The lower mold 400 is provided on the base frame 110 in such a manner as to face the upper mold 200. Also, the lower mold 400 presses the carrier tray 120 such that the upper surface of the laminated core C is pressed by the upper mold 200 while injecting resin into the magnet insertion hole C1 of the laminated core C.

That is, the upper mold 200 and the lower mold 400 may be provided such that resin is injected into the magnet insertion hole C1 while pressing both sides of the laminated core C disposed on the carrier tray 120.

The center base 300 is disposed between the upper mold 200 and the lower mold 400 and is movable in an up and down direction.

For example, the center base 300 may include a base plate 310 and a plurality of guide portions 320. The base plate 310 is disposed between the upper mold 200 and the lower mold 400 and allows the carrier tray 120 to be seated thereon. One side end of the plurality of guide portions 320 is fastened along the perimeter of the base plate 310 and the other side end is inserted into the upper mold 200 and slides.

With this configuration, when the upper mold 200 moves downward or the lower mold 400 moves upward in a state where the lower surface of the base plate 310 is in contact with the lower mold 400, the upper surface of the base plate 310 may move to contact the upper mold 200 while the guide portion 320 is inserted into the upper mold 200.

That is, the upper surface of the center base 300 may selectively contact the upper mold 200 and the lower surface of the center base 300 may selectively contact the lower mold 400. Here, the laminated core C disposed on the carrier tray 120 may be pressed by the upper mold 200 and the lower mold 400.

The base plate 310 is formed with a through hole 311 passing through the center thereof, so that the resin supply unit 410 can be inserted. That is, the lower surface of the carrier tray 120 may be exposed through the through hole 311, and the resin supply unit 410 inserted into the through hole 311 may come into close contact with the lower surface of the carrier tray 120. Through this, the resin supplied from the resin supply unit 410 may pass through the communication hole 123 of the carrier tray 120 and be supplied to the magnet insertion hole C1 of the laminated core C.

Also, the base plate 310 may be provided with a clamp 330 that fixes the position of the carrier tray 120.

The clamp 330 may cause the carrier tray 120 seated on the base plate 310 to be fixed at the upper center of the through hole 311. Here, a fastening position of the carrier tray 120 may be set by the clamp 330 such that the communication hole 123 of the carrier tray 120 is located over the resin supply unit 410.

The laminated core C where the magnet M has been inserted into a plurality of the magnet insertion holes C1 may be disposed on the carrier tray 120. The carrier tray 120 may be seated on the center base 300 and may have the communicating hole 123 communicating with the magnet insertion holes C1.

For example, the carrier tray 120 includes a plate 121 on which the laminated core C is seated, and a protrusion 122 which protrudes from the center of the plate 121 and is inserted into a through hole formed to pass through the center of the laminated core C.

Also, the communication hole 123 may be formed in the plate 121 such that the resin supplied from the resin supply portion 410 flows.

Here, the communication hole 123 may be formed at positions corresponding to positions of the plurality of magnet insertion holes C1 formed in the laminated core C. That is, the resin injected through one communication hole 123 may be supplied to one magnet insertion hole C1.

Such a communication hole 123 may be formed in a shape of which the diameter becomes smaller as it goes in the thickness direction. That is, a larger-diameter portion of the communication hole 123 may be connected to the resin supply unit 410, and a smaller-diameter portion of the communication hole 123 may be connected to the magnet insertion hole C1.

Also, a guide protrusion (not shown) is formed on one of the protrusions 122 and the through hole of the laminated core C, and a slit (not shown) is formed on the other, so that the position of the laminated core which is inserted into the protrusion 122 can be set in advance.

That is, when the laminated core C is disposed on the carrier tray 120, the magnet insertion hole C1 formed in the laminated core C must be located on the communication hole 123 formed in the carrier tray 120.

Accordingly, the laminated core C may be disposed on the carrier tray 120 such that the guide protrusion and the slit are formed on the protrusion 122 and the through hole of the laminated core C and thus the magnet insertion hole C1 is located on the communication hole 123.

The resin supply unit 410 is provided in the lower mold 400. In a state in which the laminated core C is pressed by the upper mold 200 and the lower mold 400, the resin is injected into the magnet insertion hole C1 through the communication hole 123.

As an example, the resin supply unit 410 may include a resin supply port 411, a resin supply piston 412, and a resin supply actuator 413. The resin is placed in the resin supply port 411. The resin supply piston 412 is disposed to be movable within the resin supply port 411 and presses the melted resin and injects into the magnet insertion hole C1. The resin supply actuator 413 moves the resin supply piston 412 in an up and down direction.

Here, the resin may be, for example, epoxy molding compound (EMC). The block-shaped EMC may be inserted into the resin supply port 411, heated, melted, and then injected.

With this configuration, the block-shaped resin (BS) is inserted into the resin supply port 411, and the laminated core C is pressed by bring the upper mold 200 and the lower mold 400 into contact with both sides of the center base 300. Then, the resin is melted by heating the resin supply port 411, and the melted resin can be injected into the magnet insertion hole C1 by that the resin supply actuator 413 moves the resin supply piston 412.

Here, a heating device (not shown) may be provided which heats the upper mold 200 and the lower mold 400 to a certain temperature and maintains them while the resin is filled, such that the melted resin is completely filled in the magnet insertion hole C1 of the laminated core C without being solidified.

At least one resin supply unit 410 may be provided in correspondence to the communication hole 123 of the carrier tray 120. As an example, a plurality of the resin supply units 410 may be provided, and one resin supply unit 410 may be configured to supply resin to at least one or two communication holes 123.

Hereinafter, operations of fixing the magnet M by injecting resin into the magnet insertion hole C1 of the laminated core C by using the resin filling device 100 according to the embodiment of the present disclosure will be described in order.

First, the laminated core C is disposed on the carrier tray 120, and the magnet M is inserted into the magnet insertion hole C1 of the laminated core C. Here, the magnet insertion hole C1 is located on the communication hole 123 of the carrier tray 120.

Then, the laminated core C into which the magnet M has been inserted is disposed on the carrier tray 120 is preheated together, and then the carrier tray 120 on which the laminated core is disposed is seated on the center base 300.

Then, at least one of the upper mold 200 and the lower mold 400 is moved to come into close contact with both sides of the center base 300, so that the laminated core C is pressed.

For example, the lower mold 400 moves upward and contacts the lower surface of the center base 300, and the resin supply unit 410 is disposed on the lower surface of the carrier tray 120.

Here, in order to cause the lower mold 400 and the central base 300 to be coupled at a correct position, a first guide protrusion 401 formed on the lower mold 400 may be inserted into a first guide groove 312 formed in the central base 300.

Also, in order to accurately position the communication hole 123 of the carrier tray 120 and the resin supply unit 410, a second guide protrusion 402 formed on the lower mold 400 may be inserted into a second guide groove 124 formed in the carrier tray 120.

Also, the upper mold 200 or the lower mold 400 moves additionally so that the upper mold 200 contacts the upper surface of the center base 300.

Here, in order to cause the upper mold 200 and the central base 300 to be coupled at a correct position, a third guide protrusion 403 formed on the lower mold 400 may be inserted into a third guide groove 201 formed in the upper mold 200.

In this case, the resin supply unit 410 comes in close contact with the lower surface of the carrier tray 120 and communicates with the communication hole 123, and a core pressing portion 210 to be described below comes in close contact with the upper surface of the laminated core C and presses the laminated core C with a certain pressure.

Then, the resin supply unit 410 is operated to inject the melted resin into the magnet insertion hole C1 through the communication hole 123.

Then, after the resin injection is completed and a time required for the resin to be cured elapses, the upper mold 200 and the lower mold 400 are disposed to be spaced apart from the center base 300.

Here, the residual resin remaining after being supplied to the magnet insertion hole C1 remains on the resin supply unit 410. That is, in the process of separating the lower mold 400 and the central base 300, the residual resin does not remain on the carrier tray 120, but all the residual resin remains on the resin supply unit 410.

Also, by separating the laminated core C from the carrier tray 120, the laminated core C where the magnet has been fixed to the magnet insertion hole C1 can be manufactured without additionally removing the residual resin.

The core pressing step S320 may be performed to press the entire upper surface of the laminated core with the same pressure.

To this end, the resin filling device 100 may be provided in the upper mold 200 and may further include the core pressing portion 210 that presses the upper surface of the laminated core C.

That is, in a state where the lower surface of the center base 300 is supported in contact with the lower mold 400 and the upper surface is supported in contact with the upper mold 200, the core pressing portion 210 comes in close contact with the upper surface of the laminated core C and presses the laminated core C.

As an example, the core pressing portion 210 may include a pressing plate 211 and a pressing actuator 212. The pressing plate 211 comes in contact with the upper surface of the laminated core C. The pressing actuator 212 is provided in the upper mold 200 and moves the pressing plate 211 to press the laminated core C.

Here, the pressing actuators 212 may be provided in plural numbers, and may operate at least the same or differently to press the pressing plate 211.

The laminated core C is manufactured by laminating a plurality of plates, and height deviation of the laminated core C may occur due to the manufacturing process or variation in the thickness of the plates. That is, the upper surface with which the core pressing portion 210 contacts may be formed to be inclined.

In this case, when the core pressing portion 210 presses with a certain force in a vertical direction, a high portion of the inclined upper surface of the laminated core C is preferentially pressed by contact with the core pressing portion 210, so that different pressing forces are applied overall to the laminated core C.

That is, the high portion of the inclined upper surface of the laminated core C is preferentially pressed with a relatively large pressing force, causing a problem that the laminated core C may be damaged. In addition, a relatively small pressing force is applied to a low portion of the inclined upper surface of the laminated core C, so that there is a problem that uneven pressing forces are applied overall to the laminated core C.

Therefore, in order to solve this problem, the resin filling device 100 according to the embodiment of the present disclosure is equipped with a plurality of the pressing actuators 212 and can press the pressing plate 211 with at least the same or different pressing forces.

As an example, four pressing actuators 212 are provided and are radially disposed to be spaced apart from each other at a regular interval based on the center of the laminated core C. Then, the pressing actuators 212 operate differently at four points on the upper surface of the laminated core C and press the pressing plate 211.

With this configuration, in the case where four pressing actuators 212 are provided and the laminated core C is formed to be inclined, when the four pressing actuators 212 move with the same displacement, the pressing plate 211 presses partially the laminated core C.

Accordingly, each of the pressing actuators 212 is provided to enable pressure control, thereby controlling each of the pressing actuators 212 to press the pressing plate 211 with the same pressure. Through this, the pressing plate 211 can be controlled to overall press the laminated core C with the same pressure.

The curing step S400 is to heat the resin-filled laminated core to cure the adhesive layer of the lamina member, so that the laminated core is integrated and the filled resin is simultaneously cured.

That is, in the present disclosure, the curing in the core mold is omitted, and after the resin is filled in the laminated core, the laminated core is heated to cure the adhesive layer of the lamina member. Thus, the laminated core is integrated and the filled resin is simultaneously cured.

More specifically, the curing step S400 may include a pressing step S410, a heating step S420, and a cooling step S430. The pressing step S410 is to press the resin-filled laminated core. The heating step S420 is to heat the pressed laminated core. The cooling step S430 is to cool the heated laminated core.

In the pressing step S410, the resin-filled laminated core is disposed in a press device or a separate jig device, etc., and the laminated core is pressed with a pressure of 1 to 15 MPa. Here, the pressure at which the laminated core is pressed corresponds to an example and may be changed depending on various conditions such as the lamination thickness and size of the laminated core, the thickness of the lamina member, etc.

That is, the pressing step S410 is to bring the lamina members into close contact without any gap when the adhesive layer formed between the lamina members melts in the following heating step S420.

Also, in the pressing step S410, a releasing agent is applied to both sides of the laminated core or to the portion of the device that presses the laminated core, which comes in contact with both sides of the laminated core, so that the laminated core can be prevented from being attached to the pressing device by means of an adhesive. It can be prevented. Alternatively, a release film may be placed on both sides of the laminated core, or the adhesive layers on both sides of the laminated core is removed and then the laminated core may be pressed by the pressing device.

The heating step S420 is to charge the pressed laminated core into a heating furnace (not shown) and to heat for 120 to 230 seconds at a temperature range of 110 to 210 °C. Here, the heating temperature and heating time of the laminated core correspond to an example and may be changed depending on the material of the adhesive layer and the material of the filling resin.

Also, the heating furnace may heat the laminated core by using an induction heating method or may heat the laminated core by using a heater or the like. That is, the heating furnace can be any heating device as long as it can heat the laminated core while satisfying the above conditions.

The cooling step S430 is to cool the heated laminated core.

For example, in the cooling step S430, the heated laminated core can be cooled by spraying air, cooling gas, or cooling water, etc., at high speed. Alternatively, a cooling passage is provided in the heating furnace, and the heated laminated core can be cooled within the heating furnace.

Alternatively, the curing step S400 according to the embodiment of the present disclosure can be performed simultaneously with filling the resin by the resin filling device 100 without a separate pressing device, heating device, or cooling device.

That is, as in the core pressing step S320 in which the laminated core is pressed in the resin filling step S300, in the pressing step S410, the pressing may be performed by the upper mold 200 and the lower mold 400.

Also, the heating step S420, the pressed laminated core may be heated by heating device which is provided in the upper mold 200 and the lower mold 400 and heats the mold.

Also, the cooling step (S430) can indirectly cool the heated laminated core by cooling the upper mold 200 and the lower mold 400.

Through this, the resin filling device 100 fills the resin without a separate pressing device, a heating device, and a cooling device, and then the curing process can be performed continuously, thereby reducing manufacturing costs and omitting a separate process of transferring the laminated core for the purpose of curing after filling the resin. Accordingly, the manufacturing time can be reduced.

Through such a manufacturing method for a laminated core, the curing in the core mold is omitted, and after the resin is filled in the laminated core, the laminated core is heated to cure the adhesive layer of the lamina member. Thus, the laminated core is integrated and the filled resin is simultaneously cured. As a result, the manufacturing process can be simplified and manufacturing time and cost can be reduced.

Although the present invention has been described above by way of the specific embodiments, this is for describing the present invention in detail. The present invention is not limited thereto and it is clear that the present invention can be modified or improved within the spirit of the present invention by those of ordinary skill in the art.

All simple modifications or changes of the present invention fall within the scope of the present invention. The specific scope of protection of the present invention will be apparent by the appended claims.

## Claims

1. A manufacturing method for a laminated core, the manufacturing method comprising:
a laminated core forming step of forming a laminated core by sequentially forming and laminating lamina members having a predetermined shape while passing a thin sheet having an adhesive layer formed on a surface thereof;
a magnet insertion step of inserting a magnet into a magnet insertion hole of the laminated core;
a resin filling step of filling resin in the magnet insertion hole of the laminated core into which the magnet is inserted; and
a curing step of heating the resin-filled laminated core to cure the adhesive layer of the lamina member, so that the laminated core is integrated and the filled resin is simultaneously cured.

2. The manufacturing method for a laminated core of claim 1, wherein the laminated core forming step comprises:
a lamina member manufacturing step of sequentially forming the lamina members in which common punching and embossing are formed by blanking the thin sheet; and
a lamina member integration step of laminating and pressing the lamina members and fastening a plurality of the lamina members in such a way as to form the laminated core.

3. The manufacturing method for a laminated core of claim 2, wherein, in the lamina member manufacturing step, an embossing through hole into which the embossing is inserted is formed at a position where the embossing is formed in a first lamina member forming the laminated core.

4. The manufacturing method for a laminated core of claim 1, wherein the laminated core forming step comprises:
a lamina member manufacturing step of sequentially forming the lamina members in which common punching is formed by blanking the thin sheet; and
a lamina member lamination step of laminating the lamina member on a carrier tray so as to form the laminated core.

5. The manufacturing method for a laminated core of claim 1, wherein the curing step comprises:
a pressing step of pressing the resin-filled laminated core;
a heating step of heating the pressed laminated core; and
a cooling step of cooling the heated laminated core.

6. The manufacturing method for a laminated core of claim 5, wherein, in the pressing step, the laminated core is pressed with a pressure of 1 to 15 MPa.

7. The manufacturing method for a laminated core of claim 5, wherein, in the heating step, the heating is performed for 120 to 230 seconds at a temperature range of 110 to 210 °C.

8. The manufacturing method for a laminated core of claim 1, wherein the resin filling step comprises:
a carrier tray seating step in which a carrier tray on which the laminated core is seated and which has a communication hole communicating with the magnet insertion hole is formed is disposed between an upper mold and a lower mold;
a core pressing step in which the laminated core is pressed with the upper mold and the lower mold; and
a resin injection step in which resin is injected into the magnet insertion hole through the communication hole by a resin supply unit provided in the lower mold.

9. The manufacturing method for a laminated core of claim 8, wherein the core pressing step is performed to press an entire upper surface of the laminated core with the same pressure.
